Europäisches Patentamt

European Patent Office

Office européen des brevets

(19)

(11) EP 0 630 494 B1

(12) EUROPEAN PATENT SPECIFICATION

(45) Date of publication and mention
of the grant of the patent:
**24.07.1996 Bulletin 1996/30**

(21) Application number: **93905534.9**

(22) Date of filing: **08.03.1993**

(51) Int Cl.6: **G05D 5/06**, G05D 16/20,
C03B 7/00

(86) International application number:
**PCT/GB93/00477**

(87) International publication number:
**WO 93/18445 (16.09.1993 Gazette 1993/22)**

(54) **CONTROL SYSTEM FOR GLASSWARE FORMING MACHINE**

REGELSYSTEM FÜR EINE GLASFORMMASCHINE

SYSTEME DE COMMANDE POUR MACHINE DE FORMAGE D'ARTICLES EN VERRE

(84) Designated Contracting States:
**DE ES FR GB IT**

(30) Priority: **11.03.1992 GB 9205254**

(43) Date of publication of application:
**28.12.1994 Bulletin 1994/52**

(73) Proprietor: **Emhart Glass Machinery Investments
Inc.
Wilmington, Delaware 19801 (US)**

(72) Inventors:
• **BRADSHAW, Alan
Glossop, Derbyshire (GB)**
• **COUNSELL, John
Wirral, Merseyside L48 9XG (GB)**

• **MANN, Philip A.
Ponterfract, West Yorkshire WF8 3AA (GB)**
• **PLATER, Neil, J.
Doncaster DN1 2LU (GB)**

(74) Representative: **Nash, Keith Wilfrid et al
KEITH W. NASH & Co.
Pearl Assurance House
90-92 Regent Street
Cambridge CB2 1DP (GB)**

(56) References cited:
EP-A- 0 040 075          DE-A- 3 843 593
GB-A- 2 159 813          US-A- 3 807 929
US-A- 4 599 101          US-A- 3 807 929
US-A- 4 599 101          US-A- 4 662 600

## Description

Field of invention

This invention relates to a control system suitable for use in a glassware forming machine, and in particular to a control system for controlling the movement of a moveable member in such a machine.

Background to the invention

In a common type of glassware forming machine, a gob of molten glass is formed, at a blank station, into a parison, the parison is transferred to a blow station at which it is blown into a container, and the blown container is then removed from the machine to a cooling station and thence to a conveyor.

The parison when it is transferred from the blank station to the blow station, and the blown container when it is moved from the blow station to the cooling station, are at comparatively high temperatures, and the glass of which they are formed is readily deformable. Consequently, movement of the parison and the blown container has to be very carefully controlled to avoid distortion or damage, while at the same time such movement needs to be carried out as quickly as possible to obtain the maximum output from the machine.

In the case of movement of the parison from the blank station to the blow station, this is usually performed by an invert mechanism which carries the parisons of hot glass from the blank station through about 180° about a horizontal axis, to the blow station. In the case of movement of the blown container from the blow station to the cooling station, this is usually performed by a take-out mechanism, which picks the blown containers up from the blow station and moves them, in a vertical orientation, through an arcuate path to the cooling station.

Critical control of the movement of the take-out mechanism and of the invert mechanism during their operation to move the glass is necessary in order to avoid distortion of the still soft glass and damage due to any sudden uncontrolled motion.

There are certain other mechanisms in a glassware forming machine where, for other reasons, critical control of the movement of a mechanical member is desirable. An example of this is the movement of the plunger in a parison forming operation, which needs to be closely controlled to avoid the development of excessive pressure on the glass. Other mechanisms will benefit from critical control of their movement, in that faster and more precise operation and a longer life can thus be obtained.

From US-A-4599101 there is known a type of control system (hereinafter "a control system of the type described") for controlling the movement of a driven member arranged to be driven between first and second positions by a pneumatic piston and cylinder device comprising a solenoid driven proportional pneumatic valve adapted to control the supply of air to the piston and cylinder device, a transducer which senses the position of the driven member, and an electronic signal processing system incorporating a memory in which a desired motion profile is stored, which processing system throughout each cycle receives as a feedback from the transducer the position of the driven member.

It is one object of the present invention to provide a control system of the type described which enables the aforesaid critical control to be achieved.

Summary of the Invention

According to one aspect of the invention, there is provided a control system of the type described, characterised in that the processing system produces control signals for the valve in accordance with a repetitive algorithm which takes account not only of the position error of the driven member from the motion profile but also of the instantaneous velocity and acceleration of the driven member, so that the valve supplies air to the piston and cylinder device to cause the member to move from rest at the first position to rest at the second position in a manner determined by the motion profile with the velocity and acceleration of the driven member being controlled so that the member moves from rest at its first position to rest at its second position without exceeding permitted maximum values of acceleration.

The present invention also provides in another of its aspects, an operating mechanism for a glassware forming machine comprising a driven member, a pneumatic piston and cylinder device arranged to operate the driven member, and a control system as set out in the last preceding paragraph in which the proportional pneumatic valve controls the supply of air under pressure to the piston and cylinder device.

Conveniently the operating mechanism may be a take out mechanism operating to take hot formed glassware containers from blow moulds, in which they are formed, and to deposit them on a dead plate. It will be understood that the operating mechanism could also be one of the several pneumatically operated mechanisms conventionally utilized in glassware forming machines.

Examples of two algorithms which may be used in a control system according to the invention are given below.

One algorithm (the first algorithm) which may be used to generate an output signal OP to control the mechanism, is defined as follows:

$$OP = KP* (E*(ABS(ATAN(E*KN1))+KN2))-(Kd*V+Kdd*A)$$

where OP is the output signal for the valve
KP is the proportional gain
E is the position error
KN1 is the "sharpness" parameter
KN2 is the "base value" parameter
Kd is the first differential gain
V is the velocity estimate
Kdd is the second differential gain
A is the acceleration estimate.

The output value is clipped (ie limited to the maximum and minimum values) to the physical limits of the system before being used to actuate the valve, thus: if the computed value OP is greater than 10, make OP =10, and if the computed value OP is less than - 10, make OP = -10.

For all intermediate values the actual value of OP is used to actuate the valve.

An OP value of 10 causes the multi port proportional valve to move fully in one direction which vents the cylinder volume on a first side of the piston to atmosphere while the other second side of the piston is fully open to the supply pressure. An OP value of -10 causes the multi port proportional valve to move fully in the opposite direction which connects the cylinder volume on the first side of the piston fully open to the supply pressure, while the second side of the piston is fully vented to the atmosphere.

The error is defined by:

$$E=D - P$$

Where D is the demanded position
P is the actual position.

At startup, in order to avoid a jolt, the values of V and A at startup position (PZ1) must all equal zero, ie VZ1, VZ2, AZ1 and AZ2 are all set to zero where

PZ1 is the previous position
VZ1, VZ2 are the two previous velocity estimates
AZ1, AZ2 are the two previous acceleration estimates
At time zero = OP (O) = KP* (E* (ABS [ATAN (E*KN1)] + KN2)) causes the mechanism to be driven towards the desired position.

We prefer to use a single position transducer for feedback from the driven member for example from the take out mechanism.

The equations which have been chosen for obtaining velocity (V) and acceleration (A) estimates are as follows:

$$V = ((N1*ITR)* (P-PZ1))+((D1*VZ1)+(D2 *VZ2)) \tag{1}$$

$$A =((N1*ITR)*(V-VZ1))+((D1*AZ1)+(D2*AZ2)) \tag{2}$$

where D1 and D2 are the appropriate difference coefficients, ITR is the iteration frequency and N is a chosen integer.

The above equations (1) & (2) produce smoothed velocity and acceleration estimates, and allow sensible values to be obtained in the presence of a small amount of noise on the position signal.

The effect of a large amount of noise would be to swamp the valve control signal. Reduction of the noise by smoothing involves the penalty of a time delay.

The parameters ITR, N1, D1 and D2 can be tuned to give an acceptable compromise between noise and time delay.

The effect of increasing the time delay in the velocity and acceleration estimates is that the mechanism becomes less stable, less stiff, and more vulnerable to oscillation.

The use of equations (1) and (2) for velocity and acceleration estimates respectively has enabled the problem of noise in the position signal to be overcome, and has enabled a Servo-pneumatic takeout mechanism with a single robust transducer to be constructed.

It has been found that with the quality of feedback compensation available using the signal from the chosen transducer, the error gain term of the algorithm has to be kept low in order to avoid problems with the mechanism oscillating and overshooting. This restricts the speed of movement of the mechanism.

EP 0 630 494 B1

A preferred solution to this problem is to vary the gain on the position error according to the magnitude of the position error.

This is achieved by the driving part of the algorithm, namely:

$$KP* E* (ABS (ATAN (E*KN1)) + KN2)$$

The driving part of the algorithm ensures that when the error is large the valve is opened fully to drive the mechanism quickly towards reducing the error. When the error is small, ie the mechanism approaches the desired position, the gain on the position error is reduced.

Preferably the gain on the error is reduced to a level where the differential feedback is sufficient to prevent oscillation and overshoot.

KN1 is termed the "sharpness" parameter. Increasing the value of this "sharpness" parameter causes the gain on the position error to rise more sharply as the error grows.

KN2 is the "base value" below which the gain on the error term never falls.

An alternative (second) algorithm which may be used in place of algorithm 1 to generate an output signal OP to control the mechanism is:

$$OP = I-F+RKV*D$$

where I is the integral of the position error

Fis the feedback compensation
RKV is the feedforward or "kicker" gain
D is the demand position from the motion profile.

Preferably the output OP is clipped as for algorithm 1.

Also as with the first algorithm the second algorithm is executed one every 1/ITR of a second.

The "kicker" is used to compensate for slow initial response due to the time required for the integral term to build up.

The term "F" is the Feedback Compensation.

$$F = REP*P+RKd*V+RKdd*A$$

where RKP is the proportional action gain
RKd is the differential action gain RKdd is the second differential action gain V and A are the velocity and acceleration estimates, which are obtained in the same way as for algorithm 1. Tuning to achieve a compromise between noise and the time delay may be applied as described with reference to the first algorithm.

The non-linear integral action works as follows : I = II + (1/ITR)*RKI*E where II is the integral of the error history.

RKI is the integral action gain
E is the position error, and
E = D-P
where P is the present position.

Clipping is preferably performed on the complete value for OP at this stage as described in relation to algorithm 1.

Another important feature of the algorithm is the conditioning of the integrator. A problem known as "integrator windup" can occur if this conditioning is not done. In this case the conditioning that is done is to set I equal to II if clipping of OP value is required.

Conveniently the integral term is updated after each iteration thus:

$$I (N) = II (N-1).$$

A major advantage of this second algorithm is that it is able to compensate for leakage within the valve, or for leakage within the mechanism. Steady state error is eliminated because any positional error due to leakage is integrated until the algorithm is able to eliminate it. The valve signal will continue to build as the mechanism chases the desired position.

It is a feature of both algorithms that they are able to cope well with non-linearities. The non-linearity associated with the finite capacity of the valve is no problem.

Where the maximum through-put of the control valve does not result in too large an acceleration then the valve can be fully opened to achieve the fastest possible acceleration and velocities.

The motion profile describes the desired motion of the member. Establishment of the profile is therefore very important.

Conveniently computer means is employed to display and modify motion profile data and corrections to the latter

4

are entered either via a keyboard or a manually operable unit such as a mouse or joystick or light pen or hand held terminal.

According to another aspect of the invention there is provided apparatus comprises a driven member, a pneumatic piston and cylinder device arranged to operate the driven member, a control system as set out above in which the proportional pneumatic valve controls the supply of air under pressure to the piston and cylinder device, computer means by which data describing the motion profile can be entered and stored and corrected, and means for correcting the stored data in response to observation of the movement of the driven member thereby to cause the latter to perform more precisely a desired movement.

This aspect of the invention is of particular application to the control of the takeout mechanism in a glassware forming machine, and the invention also lies in a takeout mechanism for such a machine which incorporates apparatus as aforesaid to enable the movement of the said mechanism to be controlled and also in a glassware forming machine including a takeout mechanism as aforesaid.

Brief Description of the Drawings

The invention will now be described by way of example, with reference to the accompanying drawings, in which:

Figure 1 is a schematic diagram of a pneumatic servo takeout mechanism for glassware for glassware forming machine;

Figure 2 indicates schematically the construction of the control valve shown in Figure 1;

Figure 3 is a block diagram of a servo control card; and associated components;

Figure 4 and 5 illustrate algorithms identified herein as
ALGORITHM 1 and ALGORITHM 2;

Figure 6 is a graphical representation of gain to error for a selected value of KN1.

Detailed Description of Embodiment

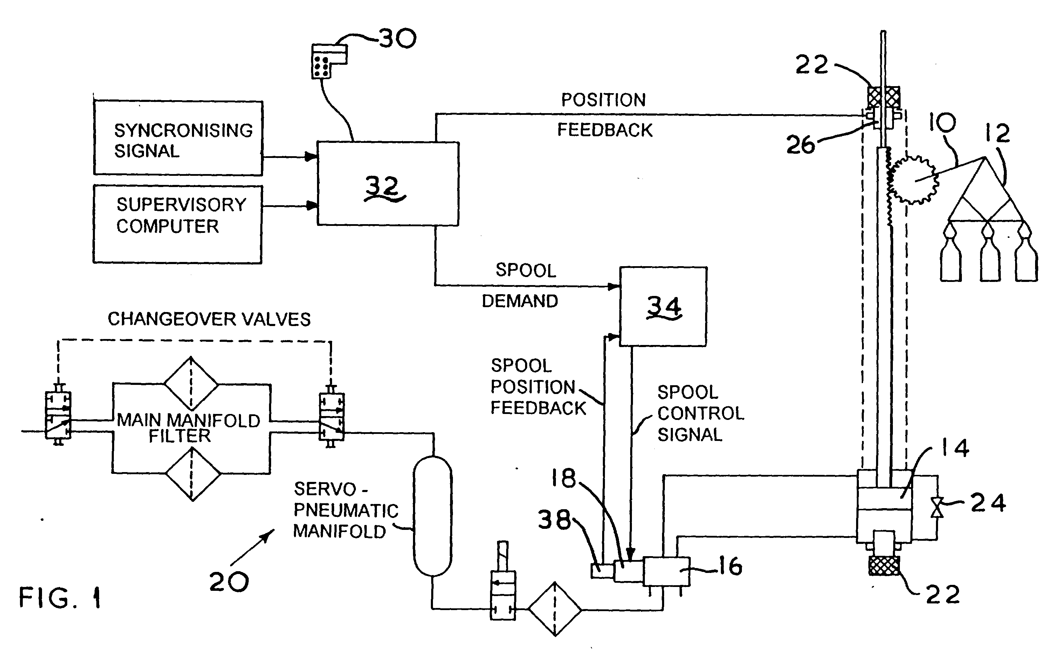

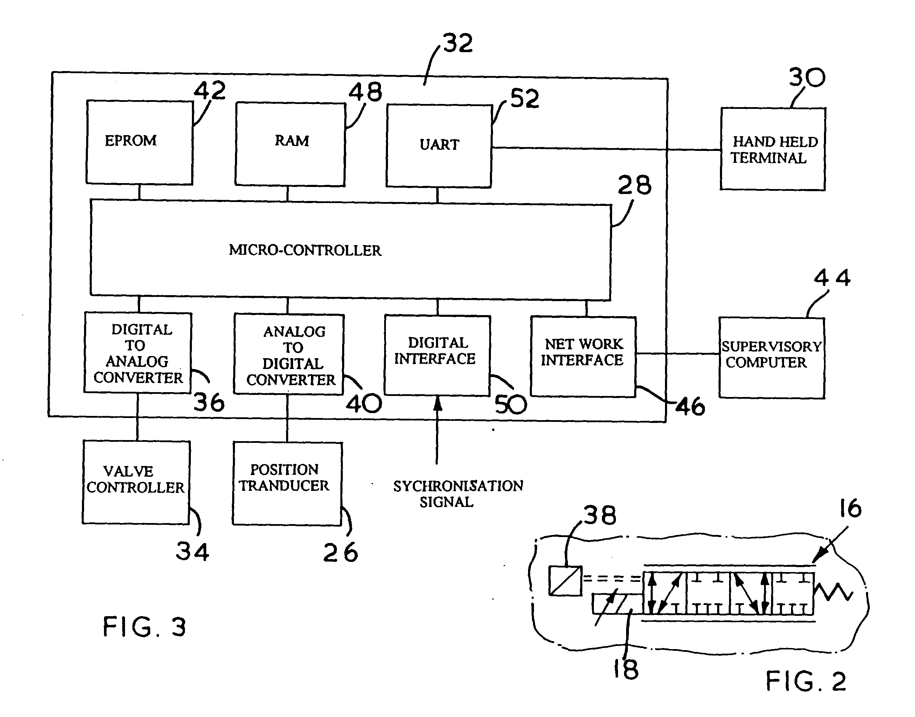

Referring to Figure 1, the illustrated takeout mechanism comprises a driven member in the form of a pivoted arm 10 carrying tongs 12 adapted to grip three formed containers at a blow mould station. The arm 10 is drivable in rotation about its pivot axis by a piston 14 of a pneumatic piston and cylinder device the displacement of which is controlled by a proportional pneumatic valve 16 operated by a solenoid 18 fed with appropriate control signals, whereby the arm 10 is swung upwardly and over to transfer the glassware from the moulding station to a cooling station. Detail of the porting of valve 16 is given in Figure 2. Having set the glassware down at the cooling station, the tongs are released and the arm returned under pneumatic control ready to pick up the next three formed containers at the moulding station.

For maximum throughput of glassware in the machine. the transfer of the arm between stations should take place as quickly as practicable.

This presents no problem on the return stroke of the arm, but during the forward stroke when the arm is transferring formed glassware which is still soft. distortion damage or defects of the glassware can occur if the motion is not carefully controlled. The transfer motion needs to take place as rapidly as possible compatible with the avoidance of distortion, damage and defects of the glassware and it is a principal object of the present invention to provide a solution to this problem.

To complete the description of Figure 1, the pneumatic air supply to the valve 16 is generally referenced 20, whilst the piston has associated with it adjustable end stops 22 providing safety in the event of a failure of the control pneumatics and a by pass valve 24.

The solenoid 18 which operates the proportional pneumatic valve 16 is supplied with control signals fed from processing electronics which throughout each cycle receives input from a position transducer 26 associated with the piston, and thus with the pivoted arm 10 which is proportionally driven in rotation by the piston.

A servo control Card 32 (Figure 3) provides a signal processing system. This comprises a micro controller 28 which is connected to a valve controller 34 and provides spool position demand signals to the valve controller 34 through a digital/analogue converter 36.

The micro controller 28 is connected through an analogue/digital converter 40 to the position transducer 26 which provides signals indicating the actual position of the mechanism, and is also connected to an EPROM 42 and RAM 48 in either of which the profile program for the mechanism movement is stored.

The machine comprises a supervisory computer 44 which is connected through a network interface 46 to the micro-controller 28 and then to a RAM 48 to which the algorithm information is passed and stored and which is accessed by the micro-controller 28 at appropriate times. The synchronization signal is supplied to the micro-controller 28 through a digital interface 50. Alternatively, the micro-controller 28 can provide the synchronization signal internally.

A UART (Universal Asynchronous Receiver Transmitter) 52 is connected to a Hand Held Terminal (HHT) 30 and to the RAM 48 to allow the constant factors of the algorithm program to be adjusted to enable the actual profile to be followed to be modified. These factors are provided to the micro-controller 28. Thus the micro-controller 28 takes the profile program from the EPROM 42 or RAM 48, the algorithm program from the EPROM 42 or RAM 48, and the individual factors from the EPROM 42, RAM 48, UART 52, or Supervisory Computer 44 and combines them to enable it repetitively to use the algorithm program and profile program to enable it to provide the necessary position demand signals to the valve controller 34.

An operator interface is provided. The embodiment uses the HHT 30 or the Supervisory Computer 44. If desired, the HHT 30 can be dispensed with and the necessary individual factors provided from the Supervisory Computer 44.

The Supervisory Computer 44 comprises display means which is arranged to display motion profile data. The HHT30 is connected to the card 32 and by its operation the motion profile data can be modified.

The valve controller 34 and the valve 16 form a servo system, the controller 34 receiving a feed back signal indicating the actual spool position from a sensor 38 and developing the actual valve control signals from the valve spool demand signals supplied by the micro controller 28 and the feed back signals from the sensor 38.

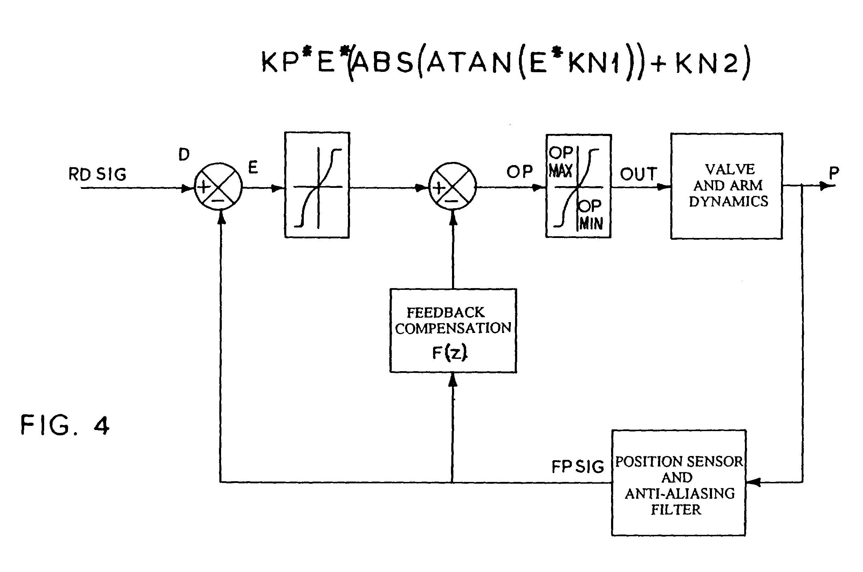

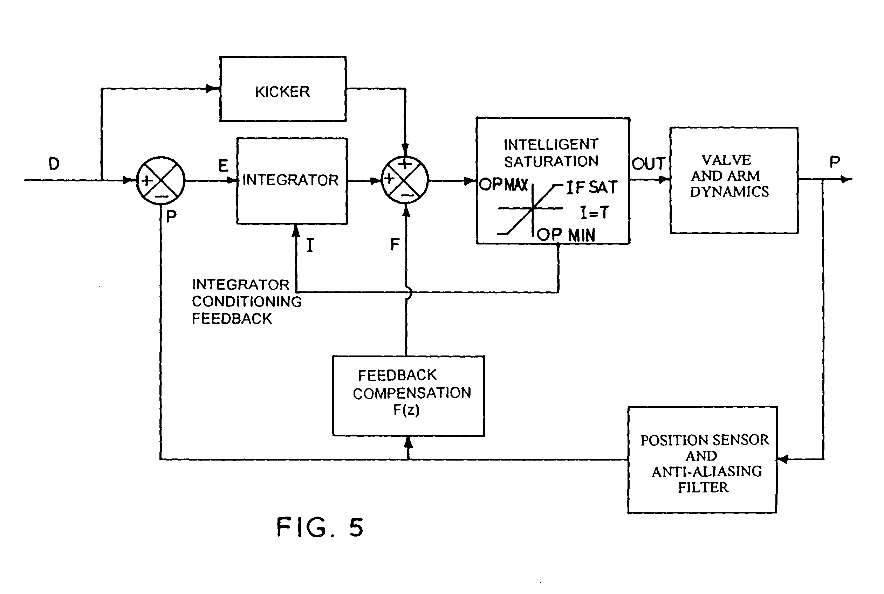

The flow chart for ALGORITHM 1 is shown in Figure 4 and that for ALGORITHM 2 in Figure 5.

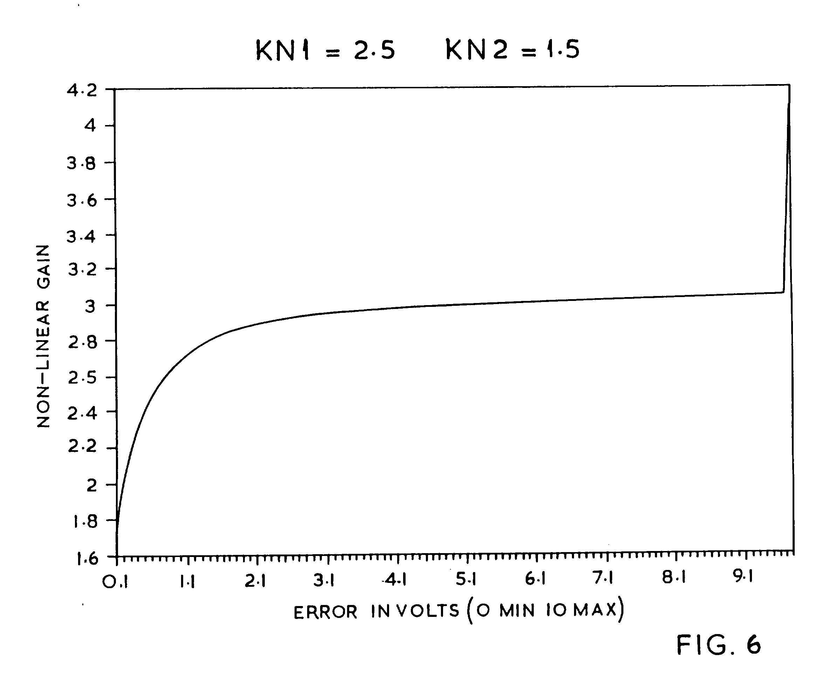

Figure 6 shows the variation of gain relative to position error for selected values of "sharpness" parameter KN1. The value of the base value of the gain (below which the error term never falls) exceeds 1.5.

Increasing the value of KN1 causes the gain on the position error to rise more sharply as the error grows.

## Claims

1. A control system for controlling the movement of a driven member (10) arranged to be driven between first and second positions by a pneumatic piston and cylinder device (14), comprising a solenoid driven proportional pneumatic valve (16) adapted to control the supply of air to the piston and cylinder device (14), a transducer (26) which senses the position of the driven member, and an electronic signal processing system (32,34) incorporating a memory in which a desired motion profile is stored, which processing system throughout each cycle receives as a feedback from the transducer (26) the position of the driven member (10), characterised in that the processing system produces control signals for the valve (16) in accordance with a repetitive algorithm which takes account not only of the position error of the driven member from the motion profile but also of the instantaneous velocity and acceleration of the driven member, so that the valve (16) supplies air to the piston and cylinder device (14) to cause the member to move from rest at the first position to rest at the second position in a manner determined by the motion profile with the velocity and acceleration of the driven member being controlled so that the member moves from rest at its first position to rest at its second position without exceeding permitted maximum values of acceleration.

2. A control system according to claim 1 characterised in that the system is so arranged that if the displacement of the member (10) from the motion profile exceeds a minimum value the signal to the valve (16) requires the valve to be duly open.

3. A control system according to claim 1 or claim 2, wherein the repetitive algorithm is defined as follows:

$$OP = KP * (E*(ABS(ATAN(E*KN1))+KN2))-(Kd*V+Kdd*A)$$

where OP is the output signal for the valve
KP is the proportional gain
E is the position error
KN1 is the "sharpness" parameter
KN2 is the "base value" parameter
Kd is the first differential gain
V is the velocity estimate
Kdd is the second differential gain
A is the acceleration estimate.

4. A control system according to any one of claims 1 to 3, wherein the feedback is obtained from a single position transducer (26).

5. A control system according to claim 3, wherein in the said algorithm the velocity (V) and acceleration (A) estimates are respectively obtained by use of the following equations:

$$V = ((N1*ITR)* (P-PZ1))+ ((D1*VZ1)+(D2*VZ2)) \qquad (1)$$

$$A = ((N1*ITR)* (V-VZ1))+((D1*AZ1)+(D2*AZ2)) \qquad (2)$$

where D1 and D2 are the appropriate difference coefficients, ITR is the iteration frequency and N is a chosen integer.

6. A control system according to claim 1 or claim 2, wherein the repetitive algorithm is defined as follows:

$$OP = I-F+RKV*D$$

where I is the integral of the position error

Fis the feedback compensation
RKV is the feedforward or "kicker" gain
D is the demand position from the motion profile.

7. A control system according to any one of claims 3, 5 and 6, wherein the output value (OP) of the algorithm used to control movement of the driven member is clipped not to exceed or be less than respective predetermined limiting values.

8. A control system according to any of claims 1 to 7, wherein a display means is connected to the signal processing system (32, 34) and is arranged to display motion profile data, and manual input means is connected to the system by which said motion profile data can be modified.

9. A control system according to claim 8 wherein the display means is comprised in a supervisory computer (44) which is connected to the signal processing system.

10. A control system according to any one of claims 8 and 9 wherein the manual input means is provided by a handheld terminal (30).

11. An operating mechanism for a glassware forming machine comprising a driven member (10), a pneumatic piston and cylinder device (14) arranged to operate the driven member and a control system as set out in any one of claims 1 to 10 in which the proportional pneumatic valve (16) controls the supply of air under pressure to the piston and cylinder device.

12. Apparatus comprising a driven member (10), a pneumatic piston and cyiinder device (14) arranged to operate the driven member, a control system according to any one of claims 1 to 10 in which the proportional pneumatic valve (16) controls the supply of air under pressure to the piston and cylinder device, computer means by which data describing the motion profile can be entered and stored and corrected, and means for correcting the stored data in response to observation of the movement of the driven member thereby to cause the latter to perform more precisely a desired movement.

13. An operating mechanism according to claim 12 in which the mechanism is a take-out mechanism and the driven member is an arm (10) of the take-out mechanism.

14. An operating mechanism according to claim 12 in which the mechanism is an invert-revert mechanism.

**Patentansprüche**

1. Ein Steuersystem zum Steuern der Bewegung eines zwischen einer ersten und einer zweiten Stellung antreibbaren angetriebenen Gliedes (10) durch eine pneumatische Kolben- und Zylinderanordnung (14) mit einem durch einen Magneten betätigten pneumatischen Proportionalventil (16) zum Steuern der Zufuhr von Luft zu der Kolben- und Zylindervorrichtung (14), einem Wandler (26), der die Lage des angetriebenen Gliedes feststellt, und einem elektronischen Signalverarbeitungssystem (32, 34) einschließlich eines Speichers, in dem ein Sollbewegungsprofil abgespeichert ist, welches Verarbeitungssystem während jedes Zyklus vom Wandler (26) die Stellung des angetriebenen Gliedes (10) als Rückkopplung empfängt, dadurch gekennzeichnet, daß das Verarbeitungssystem für das Ventil (16) Steuersignale nach Maßgabe eines sich wiederholenden Algorithmus erzeugt, der nicht nur den Stellungsfehler des angetriebenen Gliedes gegenüber dem Bewegungsprofil, sondern auch dessen augenblickliche Geschwindigkeit und Beschleunigung berücksichtigt, so daß das Ventil (16) der Kolben- und Zylindervorrichtung (14) zum Bewirken einer Verschiebung des Gliedes aus der Ruhestellung an der ersten Stellung in die an der zweiten Stellung in einer durch das Bewegungsprofil bestimmten Weise Luft zuführt, wobei die Geschwindigkeit und Beschleunigung des angetriebenen Gliedes gesteuert wird, so daß es sich aus der Ruhestellung an seiner ersten Stellung in die an seiner zweiten Stellung ohne Überschreiten der zugelassenen maximalen Beschleunigungswerte bewegt.

2.  Ein Steuersystem nach Anspruch 1, dadurch gekennzeichnet, daß es so ausgelegt ist, daß bei einer einen Minimumwert übersteigenden Verschiebung des Gliedes (10) gegenüber dem Bewegungsprofil das zum Ventil (16) geführte Signal dessen ordnungsgemäßes Öffnen verlangt.

3.  Ein Steuersystem nach Anspruch 1 oder Anspruch 2, wobei der sich wiederholende Algorithmus wie folgt festgelegt ist:

$$OP = KP*(E*(ABS(ATAN(E*KN1)+KN2))-(Kd*V+Kdd*A),$$

wobei

OP das Ausgangssignal für das Ventil,
KP die proportionale Verstärkung,
E der Stellungsfehler,
KN1 der "schärfe"-Parameter,
KN2 der "Basiswert"-Parameter,
Kd die erste Differentialverstärkung,
V die Geschwindigkeitsschätzung,
Kdd die zweite Differentialverstärkung und
A die Beschleunigungsschätzung ist.

4.  Ein Steuersystem nach irgendeinem der Ansprüche 1 bis 3, wobei die Rückkopplung von einem einzigen Stellungswandler (26) erhalten wird.

5.  Ein Steuersystem nach Anspruch 3, wobei in dem besagten Algorithmus Geschwindigkeits- bzw. Beschleunigungsschätzungen (V und A) durch Anwendung der folgenden Gleichungen erhalten werden:

$$V = ((N1*ITR)*(P-PZ1))+((D1*VZ1)+(D2*VZ2)) \qquad (1),$$

$$A = ((N1*ITR)*(V-VZ1))+((D1*AZ1)+(D2*AZ2)) \qquad (2),$$

wobei D1 und D2 die geeigneten Differenzkoeffizienten sind und ITR die Iterationsfrequenz und N eine gewählte ganze Zahl ist.

6.  Ein Steuersystem nach Anspruch 1 oder Anspruch 2, wobei der sich wiederholende Algorithmus wie folgt festgelegt ist:

$$OP = I-F+RKV*D,$$

wobei

I       das Integral des Stellungsfehlers,

F       der Rückkopplungsausgleich,

RKV   der Vorwärtsvorschub oder die "Kicker"-Verstärkung und

D       die vom Bewegungsprofil angeforderte Stellung ist.

7.  Ein Steuersystem nach irgendeinem der Ansprüche 3, 5 und 6, wobei der zum Steuern der Bewegung des ange-

**EP 0 630 494 B1**

triebenen Gliedes verwandte Ausgabewert (OP) des Algorithmus beschnitten wird, um die jeweiligen vorbestimmten Grenzwerte nicht zu überschreiten oder niedriger als diese zu sein.

8. Ein Steuersystem nach irgendeinem der Ansprüche 1 bis 7, wobei ein Displaymittel an das Signalverarbeitungssystem (32, 34) angeschlossen und so ausgelegt ist, daß es die Bewegungsprofildaten anzeigt, und ein manuelles Eingabemittel, mit dem die Bewegungsprofildaten abgeändert werden können, an das System angeschlossen ist.

9. Ein Steuersystem nach Anspruch 8, wobei das Displaymittel in einem an das Signalverarbeitungssystem angeschlossenen Überwachungsrechner (44) enthalten ist.

10. Ein Steuersystem nach irgendeinem der Ansprüche 8 und 9, wobei das manuelle Eingabemittel durch einen in der Hand gehaltenen Terminal (30) gebildet wird.

11. Ein Betätigungsmechanismus für eine Glaswarenformmaschine mit einem angetriebenen Glied (10), einer pneumatischen Kolben- und Zylindervorrichtung (14), die so ausgelegt ist, daß sie das angetriebene Glied betätigt, und einem Steuersystem wie in irgendeinem der Ansprüche 1 bis 10 dargestellt, bei dem das pneumatische Proportionalventil (16) die Zufuhr von Druckluft zu der Kolben-und Zylindervorrichtung steuert.

12. Gerät mit einem angetriebenen Glied (10), einer pneumatischen Kolben- und Zylindervorrichtung (14), die so ausgelegt ist, daß sie das angetriebene Glied betätigt, einem Steuersystem nach irgendeinem der Ansprüche 1 bis 10, bei dem das pneumatische Proportionalventil (16) die Zufuhr von Druckluft zu der Kolben- und Zylindervorrichtung steuert, mit Rechnermitteln, mit denen das Bewegungsprofil beschreibende Daten eingegeben und gespeichert und berichtigt werden können, und mit Mitteln zum Berichtigen der gespeicherten Daten nach Maßgabe der Beobachtung der Verschiebung des angetriebenen Gliedes, um damit zu bewirken, daß das letztere eine Sollbewegung genauer durchführt.

13. Ein Betätigungsmechanismus nach Anspruch 12, bei dem der Mechanismus ein Herausnehm-Mechanismus und das angetriebene Glied ein Arm (10) des Herausnehm-Mechanismus ist.

14. Ein Betätigungsmechanismus nach Anspruch 12, bei dem der Mechanismus ein Umwende-Umkehr-Mechanismus ist.

**Revendications**

1. Système de commande destiné à commander le mouvement d'un élément entraîné (10) agencé pour être entraîné entre des première et deuxième positions par un dispositif pneumatique à piston et cylindre (14) comprenant un distributeur pneumatique proportionnel (16) mu par électro-aimant adapté pour commander l'envoi de l'air au dispositif à piston et cylindrique (14), un transducteur (26) qui capte la position de l'élément entraîné, et un système de traitement (32, 34) de signaux électroniques comprenant une mémoire dans laquelle est stocké un profil de mouvement désiré, lequel système de traitement reçoit la position de l'élément entraîné (10) en tant que réaction en provenance du transducteur (26) pendant toute la durée de chaque cycle, caractérisé en ce que le système de traitement produit des signaux de commande pour le distributeur (16) en fonction d'un algorithme répétitif qui prend en compte non seulement l'erreur de position de l'élément entraîné par rapport au profil de mouvement mais aussi la vitesse et l'accélération instantanées de l'élément entraîné, de manière que le distributeur (16) envoie de l'air au dispositif à piston et cylindre (14) pour amener l'élément à se déplacer d'un état de repos dans la première position à un état de repos dans la deuxième position d'une façon qui est déterminée par le profil de mouvement, la vitesse et l'accélération de l'élément entraîné étant commandées de telle manière que l'élément passe d'un état de repos dans sa première position a un état de repos dans sa deuxième position sans excéder des valeurs d'accélération maximales permises.

2. Système de commande selon la revendication 1, caractérisé en ce que le système est agencé de telle manière que, si le déplacement de l'élément (10) par rapport au profil de mouvement excède une valeur minimum, le signal envoyé au distributeur (16) exige que le distributeur soit du ment ouvert.

3. Système de commande selon la revendication 1 ou la revendication 2, dans lequel l'algorithme répétitif est défini comme suit :

$$OP = KP* (E*(ABS(ATAN(E*KN1))+KN2))-(Kd*V+Kdd*A)$$

où OP est le signal de sortie envoyé au distributeur
KP est le gain proportionnel
E est l'erreur de position
KN1 est le paramètre "acuité"
KN2 est le paramètre "valeur de base"
Kd est le premier gain différentiel
V est l'estimation de vitesse
Kdd est le deuxième gain différentiel
A est l'estimation d'accélération.

4. Système de commande selon une quelconque des revendications 1 à 3, dans lequel la réaction est obtenue à partir d'un unique transducteur de position (26).

5. Système de commande selon la revendication 3, dans lequel, dans ledit algorithme, les estimations de vitesse (V) et d'accélération (A) sont respectivement obtenues par utilisation des équations suivantes :

$$V=((N1*ITR)*(P-PZ1))+((D1*VZ1)+(D2*VZ2)) \qquad (1)$$

$$A=((N1*ITR)*(V-VZ1))+((D1*AZ1)+(D2*AZ2)) \qquad (2)$$

où D1 et D2 sont les coefficients de différence appropriés, ITR est la fréquence d'itération et N est un entier choisi.

6. Système de commande selon la revendication 1 ou la revendication 2, dans lequel l'algorithme répétitif est défini comme suit :

$$OP = I-F+RKV*D$$

où I est l'intégrale de l'erreur de position
F est la compensation de réaction
RKV est le gain d'avance ou "d'accélération"
D est la position demandée fournie par le profil de mouvement.

7. Système de commande selon une quelconque des revendications 3, 5 et 6, dans lequel la valeur de sortie (OP) de l'algorithme utilisé pour commander le mouvement de l'élément entraîné est bornée de façon à ne pas être supérieure ou inférieure respectivement à des valeurs limites prédéterminées.

8. Système de commande selon une quelconque des revendications 1 à 7, dans lequel un moyen d'affichage est connecté au système (32, 34) de traitement des signaux et est agencé pour afficher des données de profil de mouvement, et des moyens d'entrée manuels sont connectés au système, moyens par lesquels on peut modifier lesdites données de profil de mouvement.

9. Système de commande selon la revendication 8, dans lequel les moyens d'affichage sont réalisés sous la forme d'un ordinateur superviseur (44) qui est connecté au système de traitement des signaux.

10. Système de commande selon une quelconque des revendications 8 et 9, dans lequel les moyens d'entrée manuels sont constitués par un terminal tenu à la main (30).

11. Mécanisme de commande pour une machine de moulage d'objets en verre, comprenant un élément entraîné (10), un dispositif pneumatique à piston et cylindre (14) agencé pour actionner l'élément entraîné, et un système de commande selon une quelconque des revendications 1 à 10, dans lequel le distributeur pneumatique proportionnel (16) commande l'envoi d'air sous pression au dispositif à piston et cylindre.

12. Dispositif comprenant un élément entraîné (10), un dispositif pneumatique à piston et cylindre (14) agencé pour actionner l'élément entraîné, un système de commande selon une quelconque des revendications 1 à 10, dans lequel le distributeur pneumatique proportionnel (16) commande l'envoi d'air sous pression au dispositif à piston et cylindre, des moyens du type ordinateur par lesquels des données décrivant le profil de mouvement peuvent être entrées et mémorisées et corrigées, et des moyens permettant de corriger les données mémorisées en réponse à l'observation du mouvement de l'élément entraîné, pour amener ce dernier à exécuter un mouvement désiré avec plus de précision.

13. Mécanisme de commande selon la revendication 12, dans lequel le mécanisme est un mécanisme d'extraction et l'élément entraîné est un bras (10) du mécanisme d'extraction.

14. Mécanisme de commande selon la revendication 12, dans lequel le mécanisme est un mécanisme de retournement-redressement.

FIG. 1

SYNCRONISING SIGNAL

SUPERVISORY COMPUTER

POSITION FEEDBACK

SPOOL DEMAND

CHANGEOVER VALVES

MAIN MANIFOLD FILTER

SERVO - PNEUMATIC MANIFOLD

SPOOL POSITION FEEDBACK

SPOOL CONTROL SIGNAL

EP 0 630 494 B1

EP 0 630 494 B1

**32**

**42** EPROM

**48** RAM

**52** UART

**30** HAND HELD TERMINAL

**28** MICRO-CONTROLLER

**36** DIGITAL TO ANALOG CONVERTER

**40** ANALOG TO DIGITAL CONVERTER

**50** DIGITAL INTERFACE

**46** NET WORK INTERFACE

**44** SUPERVISORY COMPUTER

**34** VALVE CONTROLLER

**26** POSITION TRANDUCER

SYCHRONISATION SIGNAL

FIG. 3

**38**

**16**

**18**

FIG. 2

EP 0 630 494 B1

$$KP*E*(ABS(ATAN(E*KN1))+KN2)$$

RD SIG    D    E    OP    OUT    P

OP MAX

OP MIN

VALVE AND ARM DYNAMICS

FEEDBACK COMPENSATION F(z)

POSITION SENSOR AND ANTI-ALIASING FILTER

FP SIG

FIG. 4

FIG. 5

KN1 = 2.5    KN2 = 1.5

FIG. 6